(19) Europäisches Patentamt
European Patent Office
Office européen des brevets

(11) EP 3 783 328 A1

(12) **EUROPEAN PATENT APPLICATION**

(43) Date of publication:
**24.02.2021 Bulletin 2021/08**

(51) Int Cl.:
***G01L 1/00*** *(2006.01)*

(21) Application number: **19192505.6**

(22) Date of filing: **20.08.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SABIC Global Technologies B.V.**
**4612 PX Bergen op Zoom (NL)**

(72) Inventors:
- **TAYEB, Mohammed A.**
  **23955-6900 Thuwal (SA)**
- **ALAKEL, Sahel**
  **23955-6900 Thuwal (SA)**
- **A. FARAH, Abdiaziz**
  **23955-6900 Thuwal (SA)**
- **ALSHARIF, Yasir**
  **23955-6900 Thuwal (SA)**
- **ALSALEM, Fahad Khalid**
  **23955-6900 Thuwal (SA)**
- **ODEH, Ihab N.**
  **Sugar Land, TX Texas 77478 (US)**

(74) Representative: **Elzaburu S.L.P.**
**Miguel Angel 21, 2nd floor**
**28010 Madrid (ES)**

(54) **TRIBOELECTRIC FORCE SENSOR FOR LOW AND MEDIUM THRESHOLD FORCE RANGES**

(57) A force sensor includes a triboelectric sensor including: a substrate layer, an electrode layer, and at least a first triboelectric layer including a triboelectric nanocomposite, the triboelectric sensor configured to generate an analog signal in response to an amount of force applied to the first triboelectric layer; and one or more circuit elements configured to convert the analog signal to a digital output. The triboelectric nanocomposite includes from about 70 wt% to about 95 wt% of a photoactive polycarbonate copolymer (XPC) and from about 5 wt% to about 30 wt% of a fluoro-containing silsesquioxane compound.

EP 3 783 328 A1

## Description

### FIELD OF THE DISCLOSURE

The present disclosure relates to force sensors, and in particular to triboelectric force sensors including a nanocomposite material including a photoactive polycarbonate copolymer and fluoro-containing silsesquioxane compound.

### BACKGROUND OF THE DISCLOSURE

Force sensing technology is a prominent and well-studied field. There are numerous problems associated with conventional force/pressure sensing apparatuses, however. The most notable problems arising from such technologies include the physical size of the apparatus, device shape freedom mechanical flexibility, operational frequency range, and materials selection. The most common conventional force sensors are mechanical gauge, piezoelectric, capacitive, and resistive force sensors.

Mechanical gauge force sensors include hydraulic, pneumatic, and strain-based gauges. They are very accurate, rigid, and can be calibrated by the manufacturer. However, they are bulky, have numerous breakable pieces, and are relatively heavy.

Piezoelectric force sensors can be thin and flexible, but they require in-house calibration.

Capacitive force sensors with touch capabilities can be used in displays. This technology is resilient to decomposition of the resistive material, and the sensors can thus have a long life if properly handled and can function through protective casings (i.e. a glass screens). However, they can only interact with dielectric or conductive materials - a smart phone screen, for example, will not work properly when used with most gloves.

Finally, resistive force sensors are conventional resistors that function on the concept of resistance change upon touch. They can be easily be integrated into circuitry and are relatively inexpensive, although the central resistive material requires time to inflate after being used. In addition, they provide a non-linear pressure response varying with environmental factors such as temperature and humidity, which reduces the chances of reproducibility. Furthermore, they are extremely fragile - if not correctly installed they will have an increased chance of malfunction with use.

Triboelectric force or pressure sensing is a promising field of research that has received scientific attention. Electrostatic charges are generated on the surface of a triboelectric layer upon friction and increase in a direct correlation to the amount of force applied onto the material. Triboelectric force sensing is, in effect, the reaction of a triboelectric material to the amount of force applied on it. There are many reports describing triboelectric materials that can provide high output voltage based on a material's intrinsic property, processing method, form factor, or device architecture. However, sensitivity and force threshold for triboelectric force sensing materials is an area that has not been fully explored.

These and other shortcomings are addressed by aspects of the disclosure.

### SUMMARY

A force sensor includes a triboelectric sensor including: a substrate layer, an electrode layer, and at least a first triboelectric layer including a triboelectric nanocomposite, the triboelectric sensor configured to generate an analog signal in response to an amount of force applied to the first triboelectric layer; and one or more circuit elements configured to convert the analog signal to a digital output. The triboelectric nanocomposite includes from about 70 wt% to about 95 wt% of a photoactive polycarbonate copolymer (XPC) and from about 5 wt% to about 30 wt% of a fluoro-containing silsesquioxane compound.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.

FIG. 1 is a schematic diagram of an exemplary triboelectric force sensor.
FIG. 2 is a schematic showing performance of the exemplary force sensor of FIG. 2.
FIG. 3 illustrates an exemplary overall block diagram of a practical triboelectric-based force sensor.
FIGS. 4(a)-4(d) illustrate output waveforms for the force sensor.
FIG. 5 is a circuit schematic of an exemplary force sensor according to aspects of the disclosure.
FIG. 6 shows an exemplary circuit used to generate reference voltages according to an aspect of the disclosure.

FIG. 7 illustrates a test force application device used in the examples of the present disclosure.

FIG. 8 is a schematic of an exemplary control system used for determining voltage generated by the force sensor according to an aspect of the disclosure.

FIG. 9 is a graph showing a voltage output recording for a force sensor according to an aspect of the disclosure.

FIG. 10 is a graph showing average voltage output vs. force for a force sensor according to an aspect of the disclosure.

FIG. 11 is a graph comparing performance of a force sensor according to an aspect of the disclosure to a conventional sensor.

## DETAILED DESCRIPTION

The present disclosure can be understood more readily by reference to the following detailed description of the disclosure and the Examples included therein. In various aspects, the present disclosure pertains to a force sensor including a triboelectric sensor including: a substrate layer, an electrode layer, and at least a first triboelectric layer including a triboelectric nanocomposite, the triboelectric sensor configured to generate an analog signal in response to an amount of force applied to the first triboelectric layer; and one or more circuit elements configured to convert the analog signal to a digital output. The triboelectric nanocomposite includes from about 70 wt% to about 95 wt% of a photoactive polycarbonate copolymer (XPC) and from about 5 wt% to about 30 wt% of a fluoro-containing silsesquioxane compound.

The force sensor according to the present disclosure incorporates a blend of cross-linkable polycarbonate thermoplastics (XPC) and a fluoro-containing silsesquioxane compound such as perfluoro polyhedral silsesquioxane (F-POSS) as the active layer of the sensor. The sensor may be integrated with circuit elements on a flexible substrate using thin film deposition techniques, and exhibits a higher voltage output than conventional triboelectric materials such as poly(vinylidene fluoride-trifluoroethylene) (PVDF-TrFE), providing a higher force range and better pressure sensitivity. Most of the research done in the area of triboelectric force sensing to date has focused on theory and lacks solid quantification of applied force. Accordingly, the present disclosure focuses at least in part on quantifying the voltage output resulting from the applied forces at low and medium ranges (up to around 40 N), and considers potential applications for this technology, which include but are not limited to the Internet of things, the medical sector, mobile devices, instruments and the automotive sector.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a triboelectric nanocomposite" includes mixtures of two or more triboelectric nanocomposites.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly,

when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm 10\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, "polycarbonate" refers to an oligomer or polymer comprising residues of one or more dihydroxy compounds, e.g., dihydroxy aromatic compounds, joined by carbonate linkages; it also encompasses homopolycarbonates, copolycarbonates, and (co)polyester carbonates.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

**Force Sensor**

The mechanism of triboelectric technology is based on the coupling effects of triboelectric and electrostatic induction, as already known and well investigated. The charge density accumulated during a contact event increases with the applied mechanical pressure due to an increase in the contact area between corresponding active layers. Electrons are transferred due to the potential difference between the electrode and the ground in the forward and backward directions. FIG. 1 shows a schematic diagram of a single-electrode force sensor. The force levels are detected by measuring the current flows or the voltage drop across an electrical load (resistor and diode) connected to a bottom electrode. See also FIG. 2.

FIG. 3 illustrates an exemplary overall block diagram of a practical triboelectric-based force sensor according to aspects of the disclosure. The sensor includes of four major blocks. The first block is the triboelectric force sensor that can generate pulses of voltage of different amplitudes based on the force exerted on its surface as shown in FIG. 4(a). This voltage is passed to a voltage regulator to smoothen the pulse and turn it into a flat voltage. Each level of voltage corresponds to a certain value of force as shown in FIG. 4(b). Finally, an analog to digital converter is used to convert the voltage into a digital signal, which then is used to control the load accordingly, such as light intensity (FIG. 4(c)) or sound volume (FIG. 4(d)).

FIG. 5 shows an exemplary circuit schematic that turns on 3 LEDs in response to force (the three weights) exerted on the triboelectric sensor. The sensor has a resistor R1 (in this example 500 megaohm (MΩ)) connected to it. This is a relatively high resistor in this application, and as a result a buffer circuit (voltage follower) is included to enhance the resistance mismatch by increasing the total resistance seen by the sensor. The voltage is smoothened using a full-wave bridge rectifier and a capacitor, and then digitalized using an analog to digital (A/D) converter. Each of the codes in the A/D converter corresponds to a given force value. The distinct value of the voltage is then compared to three different reference voltages (Ref1, Ref2, and Ref3). When the triboelectric voltage exceeds the first reference voltage (Ref1) it triggers the first comparator, which turns on the first LED. The process repeats itself with the other LEDs until the triboelectric voltage saturates and reaches the maximum value. The circuit used to generate the reference voltages is shown in FIG. 6. According the voltage divider rule, the supply voltage (Vs) is distributed among the resistors connected in series. The value of the voltage of which each resistor holds across its terminal is given by Equation (1):

$$V_{R1} = V_S * \frac{R_1}{R_1+R_2+R_3+\cdots Rn} \qquad (1)$$

where,

$R_n$: Resistance of resistor n (Ω)
$V_{R1}$: Voltage across $R_1$ (V)
$V_s$: Voltage supply that feeds all the resistors in series (V)

Accordingly, the desired reference voltage can be designed by properly choosing the resistance values connected in series as well as the supply voltage.

It will be recognized that the circuit elements described above are merely exemplary, and that the analog signal from the triboelectric sensor could be converted to a digital output using any manner of circuit element known to those skilled in the art.

Aspects of the disclosure thus relate to a force sensor including: a triboelectric sensor including a substrate layer, an electrode layer, and at least a first triboelectric layer including a triboelectric nanocomposite, the triboelectric sensor configured to generate an analog signal in response to an amount of force applied to the first triboelectric layer; and one or more circuit elements configured to convert the analog signal to a digital output. The triboelectric nanocomposite includes from about 70 wt% to about 95 wt% of a photoactive polycarbonate copolymer (XPC) and from about 5 wt% to about 30 wt% of a fluoro-containing silsesquioxane compound.

XPC is a photoactive cross-linkable polycarbonate resin that includes about 0.5 mole % to about 5 mole % endcap groups derived from the monohydroxybenzophenone, including from about 1 mole % to about 3 mole, or from about 1.7 mole % to about 2.5 mole %, or from about 2 mole % to about 2.5 mole %, or from about 2.5 mole % to about 3.0 mole %, or from about 3.5 mole % to about 4.0 mole % endcap groups derived from the monohydroxybenzophenone. Most desirably, the monohydroxybenzophenone is 4-hydroxybenzophenone. In a particular aspect the resin includes about 3.5 mole % endcap groups derived from 4-hydroxybenzophenone, as shown in formula (1) below:

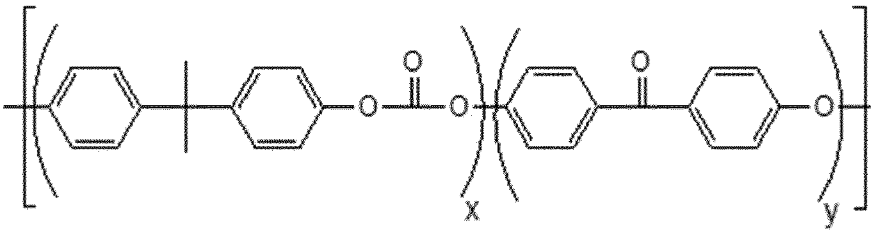

y = 3.5% (1)

XPC may be formed in accordance with the methods described in U.S. Patent Publication No. 2017/0247507, the disclosure of which is incorporated herein by this reference in its entirety.

In one aspect the XPC is derived from bisphenol-A polycarbonate and comprises from about 0.1 mole % to about 5 mole % benzophenone moieties. In a particular aspect the XPC is derived from bisphenol-A polycarbonate and comprises about 3.5 mole % benzophenone moieties.

In some aspects the nanocomposite includes about 85 wt% XPC and about 15 wt% of the fluoro-containing silsesquioxane compound.

The fluoro-containing silsesquioxane compound may include, but is not limited to, alkyl perfluoro polyhedral oligomeric silsesquioxane, isofluoropropyl polyhedral oligomeric silsesquioxane (F-POSS), or a combination thereof. F-POSS is isofluoropropyl polyhedral oligomeric silsesquioxane, and has the chemical structure shown in formula (2):

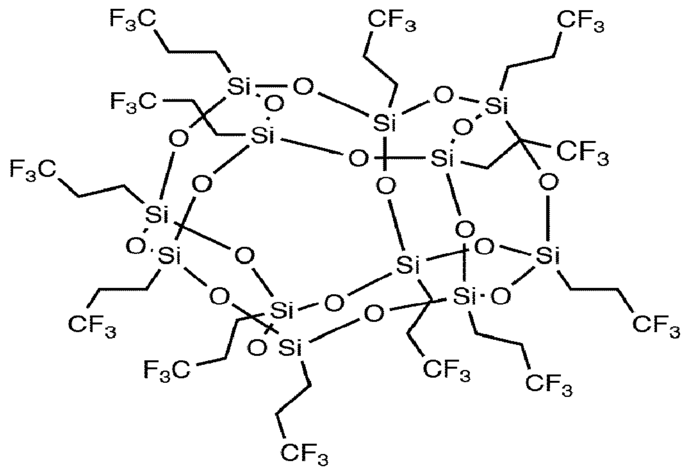

(2)

As noted, the triboelectric sensor includes at least one triboelectric layer including a triboelectric nanocomposite. A triboelectric nanocomposite is a triboelectric material having nanosized particles (less than 100 nanometers) in a matrix. As described herein, the nanocomposite includes nanosized particles of the fluoro-containing silsesquioxane compound (e.g., F-POSS) and the matrix includes XPC.

The substrate layer may include any suitable material. In some aspects the substrate layer includes a polymer, a metal, a composite, a glass or a combination thereof.

The electrode layer may include any suitable electrically conductive material, including semiconducting polymeric materials, composite materials, and metals. In certain aspects the electrode layer includes, but is not limited to, tin oxide, cadmium oxide, indium oxide, zinc oxide, magnesium oxide, indium tin oxide (ITO), gold, silver, or a combination thereof.

In some aspects the triboelectric composite includes a second triboelectric layer having an electro affinity opposite that of the first triboelectric layer. The second triboelectric layer may include, but is not limited to, poly(methyl methacrylate) (PMMA), rubber, nylon, or a combination thereof.

In certain aspect the triboelectric composite includes a plurality of electrode layers.

In some aspects the force sensor includes circuit elements including: a voltage regulator to receive the analog signal from the triboelectric composite and convert the analog signal to a voltage; an analog to digital converter to convert the voltage to a digital signal corresponding to the amount of force applied to the first triboelectric layer; and a load,

wherein the digital signal operates the load.

In some aspects the load is a lighting apparatus or a sound volume controller. The voltage regulator may include a full wave bridge rectifier. In some aspects the one or more circuit elements include a voltage follower located between the triboelectric composite and the voltage regulator.

The force sensor according to aspects of the disclosure provides improved performance as compared to conventional triboelectric sensors. In certain aspects, the triboelectric composite generates a voltage that is at least 50% higher at an applied force of 14 Newtons than a comparative composite that includes a first triboelectric layer including poly(vinylidene fluoride-trifluoroethylene) (PVDF-TrFE) film instead of the triboelectric nanocomposite.

In some aspects the force sensor includes a protective layer or an encapsulation to protect the various layers of the sensor. Exemplary materials for use in the protective layer or encapsulation include, but are not limited to, parylene (e.g., poly(p-xylylene) polymer), glass, polyimide (e.g., DuPont™ Kapton®), polyethylene terephthalate (PET), polyurethane, and combinations thereof.

The force sensor according to aspects of the disclosure offers shape and design freedom. It may be formed into a thin flexible film, resulting in lower manufacturing costs, providing the option for disposable sensors. In addition, it could be optically transparent, translucent, or opaque depending on the choice of materials. In some aspects the force sensor could be integrated into 3D structures and surfaces. In certain aspects the sensor may be self-powered. In yet further aspects the force sensor may be multifunctional, providing the ability to identify touch, applied force, and also the touching material.

The force sensor may be used in any suitable application, including but not limited to a touch screen, a mobile communication device, a watch, a keyboard, an article of clothing, an automobile (window control button), an instrument (e.g., operating and control buttons), the Internet of things, a pressure sensor or a weight balance. For example, the force sensor could be incorporated into the sound-level control button on a mobile device. In another aspect the force sensor could be incorporated into a wearable device. In an automotive application the force sensor could operate a window or other aspect of the vehicle. In another aspect the force sensor could be incorporated into an energy harvesting device; friction from touching the triboelectric sensor could generate energy. In a further aspect the force sensor could be incorporated into a robotic device; the robotic device could sense force applied during events such as holding objects and handshakes.

Various combinations of elements of this disclosure are encompassed by this disclosure, e.g., combinations of elements from dependent claims that depend upon the same independent claim.

## Aspects of the Disclosure

In various aspects, the present disclosure pertains to and includes at least the following aspects.

Aspect 1. A force sensor comprising:

a triboelectric sensor comprising a substrate layer, an electrode layer, and at least a first triboelectric layer comprising a triboelectric nanocomposite, the triboelectric sensor configured to generate an analog signal in response to an amount of force applied to the first triboelectric layer; and
one or more circuit elements configured to convert the analog signal to a digital output,
wherein the triboelectric nanocomposite comprises from about 70 wt% to about 95 wt% of a photoactive polycarbonate copolymer (XPC) and from about 5 wt% to about 30 wt% of a fluoro-containing silsesquioxane compound.

Aspect 2. The force sensor according to claim 1, wherein the nanocomposite comprises about 85 wt% XPC and about 15 wt% of the fluoro-containing silsesquioxane compound.

Aspect 3. The force sensor according to claim 1 or 2, wherein the fluoro-containing silsesquioxane compound comprises isofluoropropyl polyhedral oligomeric silsesquioxane (F-POSS).

Aspect 4. The force sensor according to any of claims 1 to 3, wherein the XPC is derived from bisphenol-A polycarbonate and comprises from about 0.1 mole % to about 5 mole % benzophenone moieties.

Aspect 5. The force sensor according to any of claims 1 to 4, wherein the XPC is derived from bisphenol-A polycarbonate and comprises about 3.5 mole % benzophenone moieties.

Aspect 6. The force sensor according to any of claims 1 to 5, wherein the substrate layer comprises a polymer, a metal, a composite, a glass, or a combination thereof.

Aspect 7. The force sensor according to any of claims 1 to 6, wherein the electrode layer comprises tin oxide, cadmium oxide, indium oxide, zinc oxide, magnesium oxide, indium tin oxide (ITO), gold, silver, or a combination thereof.

Aspect 8. The force sensor according to any of claims 1 to 7, wherein the triboelectric composite comprises a second

triboelectric layer having an electro affinity opposite that of the first triboelectric layer.

Aspect 9. The force sensor according to any of claims 1 to 8, wherein the triboelectric composite comprises a plurality of electrode layers.

Aspect 10. The force sensor according to any of claims 1 to 9, wherein the one or more circuit elements comprise:

a voltage regulator to receive the analog signal from the triboelectric composite and convert the analog signal to a voltage;
an analog to digital converter to convert the voltage to a digital signal corresponding to the amount of force applied to the first triboelectric layer; and
a load, wherein the digital signal operates the load.

Aspect 11. The force sensor according to claim 10, wherein the voltage regulator comprises a full wave bridge rectifier.

Aspect 12. The force sensor according to any of claims 1 to 11, wherein the one or more circuit elements further comprise a voltage follower located between the triboelectric composite and the voltage regulator.

Aspect 13. The force sensor according to any of claims 1 to 12, wherein the triboelectric composite generates a voltage that is at least 50% higher at an applied force of 14 Newtons than a comparative composite that includes a first triboelectric layer comprising poly(vinylidene fluoride-trifluoroethylene) (PVDF-TrFE) film instead of the triboelectric nanocomposite.

Aspect 14. The force sensor according to any of claims 1 to 13, wherein the sensor is incorporated into a touch screen, a mobile communication device, a watch, a keyboard, an automobile, an instrument, an article of clothing, an energy harvesting device, or a robotic device.

Aspect 15. The force sensor according to any of claims 1 to 14, wherein the load is a lighting apparatus or a sound volume controller.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

### Sensor fabrication and Materials Synthesis

An exemplary method for forming an impact sensor is summarized in the following steps:

Step 1. Flexible and rigid substrate preparation and cleaning. Two substrates were used to fabricate various devices: glass (2.54x2.54 square centimeter ($cm^2$)); and 125 μm thick Polyethylene naphthalate (PEN) (1-2.5 cm diameter). Each substrate was cleaned with acetone, isopropanol (IPA), and deionized water for 5 minutes in an ultrasonic bath, followed by blow-drying with high purity nitrogen.

Step 2. Electrode Deposition. Approximately 20 nanometer (nm) titanium/80 nm gold electrodes were deposited onto the substrates by electron beam evaporation and patterned in the desired geometry using a predesigned fabricated shadow mask (fabricated by laser cutter).

Step 3. Triboelectric layers deposition. 20 wt% PVDF-TrFE was dissolved in dimethylformamide (DMF). The PVDF-TrFE copolymer included 70 wt% polyvinyldieneflouride and 30 wt% trifluoroethylene. An analytical grade of DMF was used. Similarly, 20 wt% XPC-F-POSS was dissolved in DMF. The XPC-F-POSS composition included 85% cross-linked polycarbonate (XPC) and 15% fluorinated polyhedral oligomeric silsesquioxane (F-POSS). The solutions were magnetically stirred at a temperature of about 50-60 °C until full dissolution was observed (about 2-4 hours). The solutions were then spin coated on the electrode-coated substrates at a fixed spin speed of 1000 rpm to obtain roughly 16 and 11 micron (μm) thickness films for PVDF-TrFE and XPC-F-POSS, respectively. Finally, the sensors were cured in a vacuum oven for 2 hours at 100 °C.

**Triboelectric Force Sensor Characterization:**

The voltage generated by the force sensor was obtained using a Keithley Sourcemeter 6430, which is highly sensitive and has the ability to supply and read voltage values. It can record up to 75 data points per second in ideal conditions. The measurements were conducted by varying the pressure (force/area) applied to the sensor/triboelectric layer. The force applied to the force sensor was characterized through a closed loop control system, which had been designed and fabricated as shown in FIGS. 7 and 8. The system included a linear motor (3), a Futek load cell, the triboelectric force sensor, a support frame (2), and wiring connections. In addition, LabVIEW software and LinMot Talk configuration software were used.

First, a force sensor sample was attached to a sample holding plate (1). Then, control parameters were specified in the LinMot talk (i.e. speed, frequency, hold time, and desired force). When the linear motor triggers, it will hit the sensor at a certain force. This force is measured by the load cell, which is attached to the tip of the linear motor, kept in place by a special case designed and 3D-printed in house. The measured force value is sent to the PID controller to be processed and based on that a new suitable value of the linear motor current is adjusted to give the accurate desired output force. The LabVIEW software measured the output voltage generated from the force sensor. In addition, for comparison and analysis, all other parameters (i.e., speed, frequency, hold time, current and measured force) were monitored and recorded by LinMot Talk.

The force sensor was connected to a special coded LabVIEW program through a breadboard on which a 1 giga-ohm (GΩ) resistor was placed to ensure continuous and immediate data logging. The maximum voltage value that could be read was 21 volts (V) as per the sourcemeter limits. LabVIEW code was used to record the electrical voltage generated upon contact with the triboelectric layer. Both the voltage and force measurements were recorded at the same time to record their corresponding outputs, simultaneously. FIG. 9 shows a typical voltage output recording from the presented polymeric film/sensor at approximately 10 Newton (N).

FIG. 10 showed average output voltage for the polymeric sensor upon dynamic excitement when using XPC-F-POSS as the triboelectric layer under applied forces up to 14 N. The sensitivity of the XPC-F-POSS varied between 0.8 and 1.8 V/N. The same material was also tested at a force of about 41 N and a value higher than 21 V was shown. This was due to sourcemeter capability limitations. FIG. 11 provides a comparison of the XPC-F-POSS film with a conventional PVDF-TrFE material. The results show a clear trend of increasing voltage as a function of applied pressure. However, XPC-F-POSS shows higher output performance than PVDF-TrFE, in particular at higher forces. The output differs by more than 50% at a force of 14 N.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

**1.** A force sensor comprising:

a triboelectric sensor comprising a substrate layer, an electrode layer, and at least a first triboelectric layer comprising a triboelectric nanocomposite, the triboelectric sensor configured to generate an analog signal in response to an amount of force applied to the first triboelectric layer; and
one or more circuit elements configured to convert the analog signal to a digital output,
wherein the triboelectric nanocomposite comprises from about 70 wt% to about 95 wt% of a photoactive polycarbonate copolymer (XPC) and from about 5 wt% to about 30 wt% of a fluoro-containing silsesquioxane compound.

**2.** The force sensor according to claim 1, wherein the nanocomposite comprises about 85 wt% XPC and about 15 wt% of the fluoro-containing silsesquioxane compound.

**3.** The force sensor according to claim 1 or 2, wherein the fluoro-containing silsesquioxane compound comprises isofluoropropyl polyhedral oligomeric silsesquioxane (F-POSS).

**4.** The force sensor according to any of claims 1 to 3, wherein the XPC is derived from bisphenol-A polycarbonate and comprises from about 0.1 mole % to about 5 mole % benzophenone moieties.

**5.** The force sensor according to any of claims 1 to 4, wherein the XPC is derived from bisphenol-A polycarbonate and comprises about 3.5 mole % benzophenone moieties.

**6.** The force sensor according to any of claims 1 to 5, wherein the substrate layer comprises a polymer, a metal, a composite, a glass, or a combination thereof.

**7.** The force sensor according to any of claims 1 to 6, wherein the electrode layer comprises tin oxide, cadmium oxide, indium oxide, zinc oxide, magnesium oxide, indium tin oxide (ITO), gold, silver, or a combination thereof.

**8.** The force sensor according to any of claims 1 to 7, wherein the triboelectric composite comprises a second triboelectric layer having an electro affinity opposite that of the first triboelectric layer.

**9.** The force sensor according to any of claims 1 to 8, wherein the triboelectric composite comprises a plurality of electrode layers.

**10.** The force sensor according to any of claims 1 to 9, wherein the one or more circuit elements comprise:

a voltage regulator to receive the analog signal from the triboelectric composite and convert the analog signal to a voltage;
an analog to digital converter to convert the voltage to a digital signal corresponding to the amount of force applied to the first triboelectric layer; and
a load, wherein the digital signal operates the load.

**11.** The force sensor according to claim 10, wherein the voltage regulator comprises a full wave bridge rectifier.

**12.** The force sensor according to any of claims 1 to 11, wherein the one or more circuit elements further comprise a voltage follower located between the triboelectric composite and the voltage regulator.

**13.** The force sensor according to any of claims 1 to 12, wherein the triboelectric composite generates a voltage that is at least 50% higher at an applied force of 14 Newtons than a comparative composite that includes a first triboelectric layer comprising poly(vinylidene fluoride-trifluoroethylene) (PVDF-TrFE) film instead of the triboelectric nanocomposite.

**14.** The force sensor according to any of claims 1 to 13, wherein the sensor is incorporated into a touch screen, a mobile communication device, a watch, a keyboard, an automobile, an instrument, an article of clothing, an energy harvesting device, or a robotic device.

**15.** The force sensor according to any of claims 1 to 14, wherein the load is a lighting apparatus or a sound volume controller.

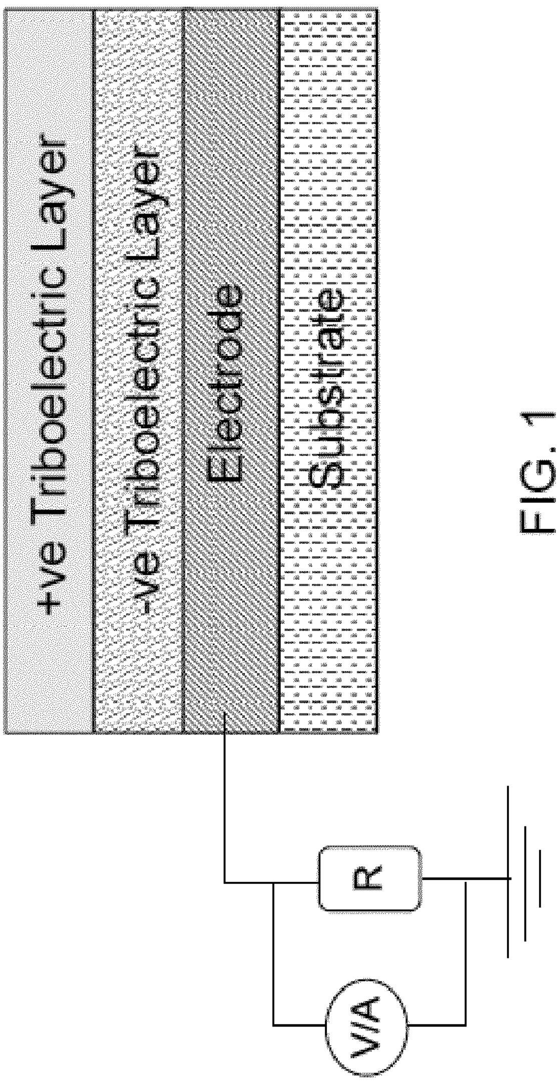
+ve Triboelectric Layer
-ve Triboelectric Layer
Electrode
Substrate
R
V/A

FIG. 1

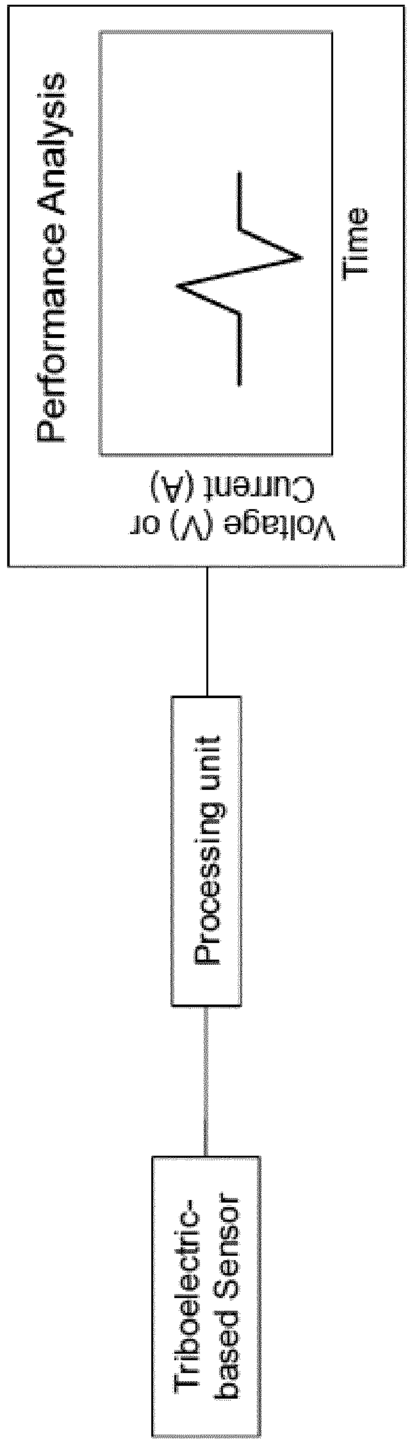
Triboelectric-based Sensor
Processing unit
Performance Analysis
Voltage (V) or Current (A)
Time

FIG. 2

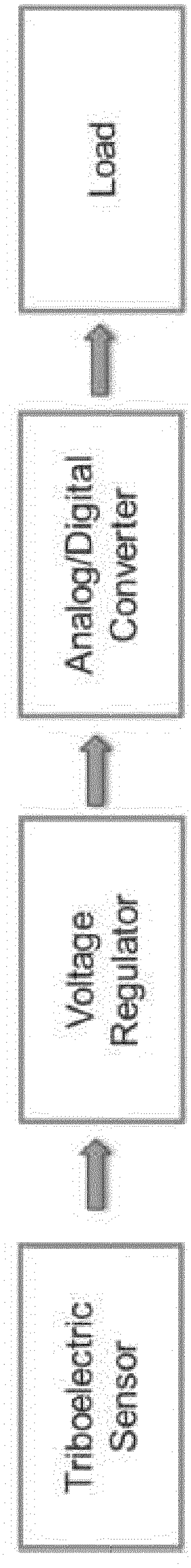


FIG. 3

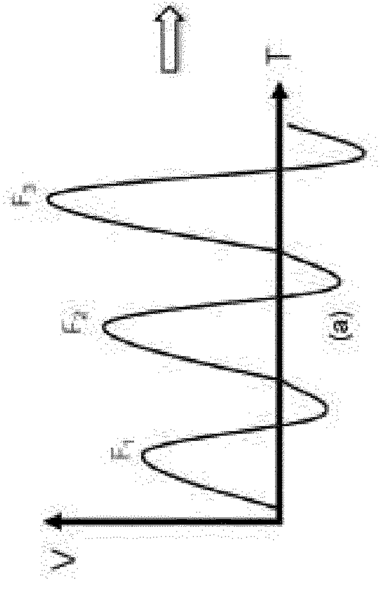


FIG. 4(a)

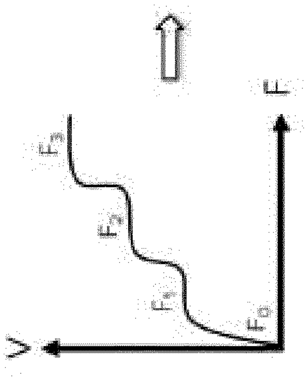


FIG. 4(b)

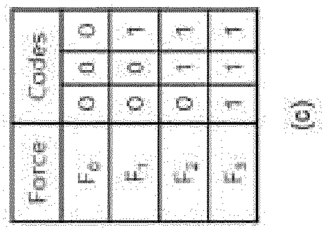


FIG. 4(c)

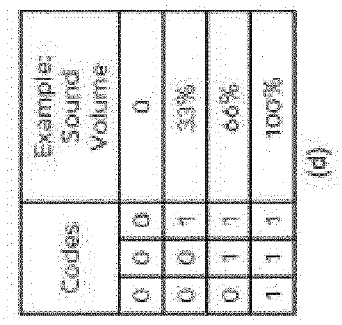


FIG. 4(d)

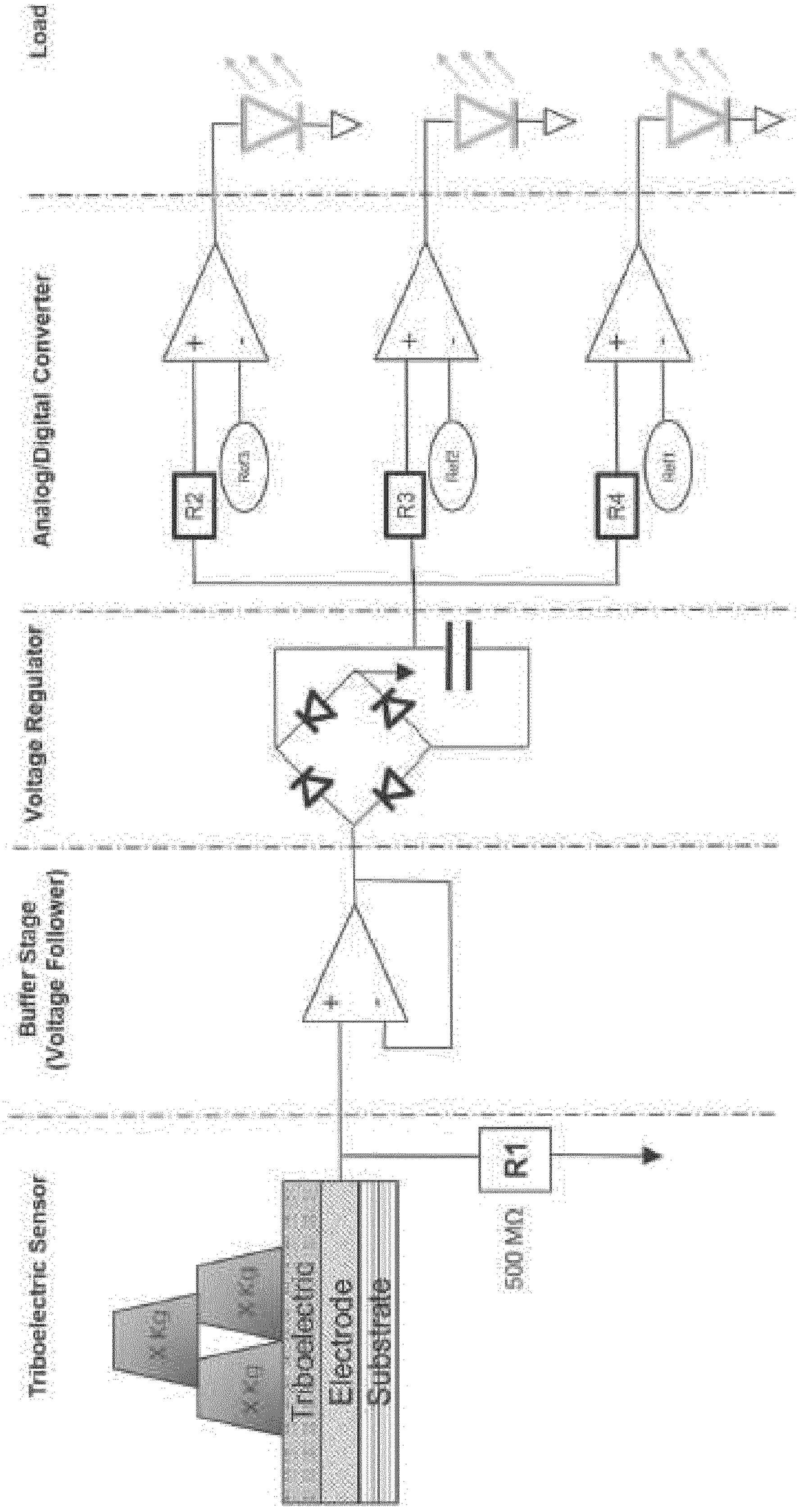
Triboelectric Sensor
Buffer Stage
(Voltage Follower)
Voltage Regulator
Analog/Digital Converter
Load
X Kg
X Kg
X Kg
Triboelectric
Electrode
Substrate
R1
500 MΩ
R2
R3
R4
+
-

FIG. 5

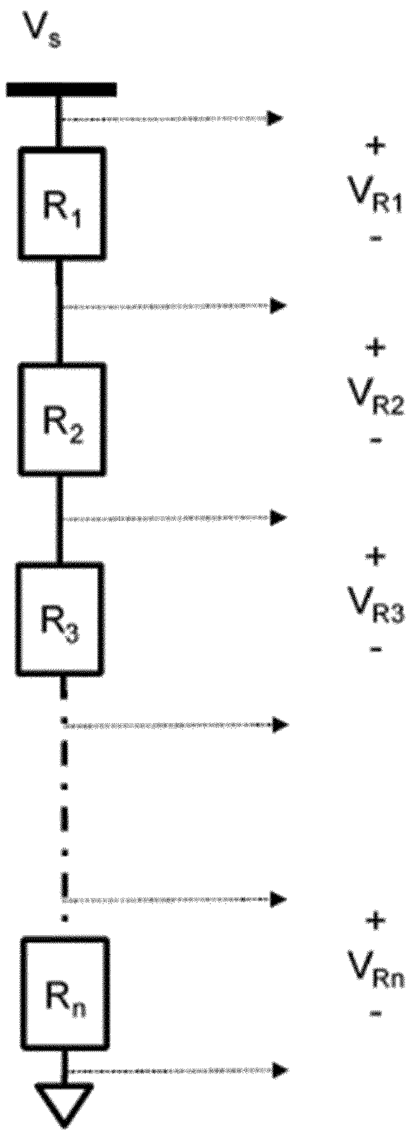


FIG. 6

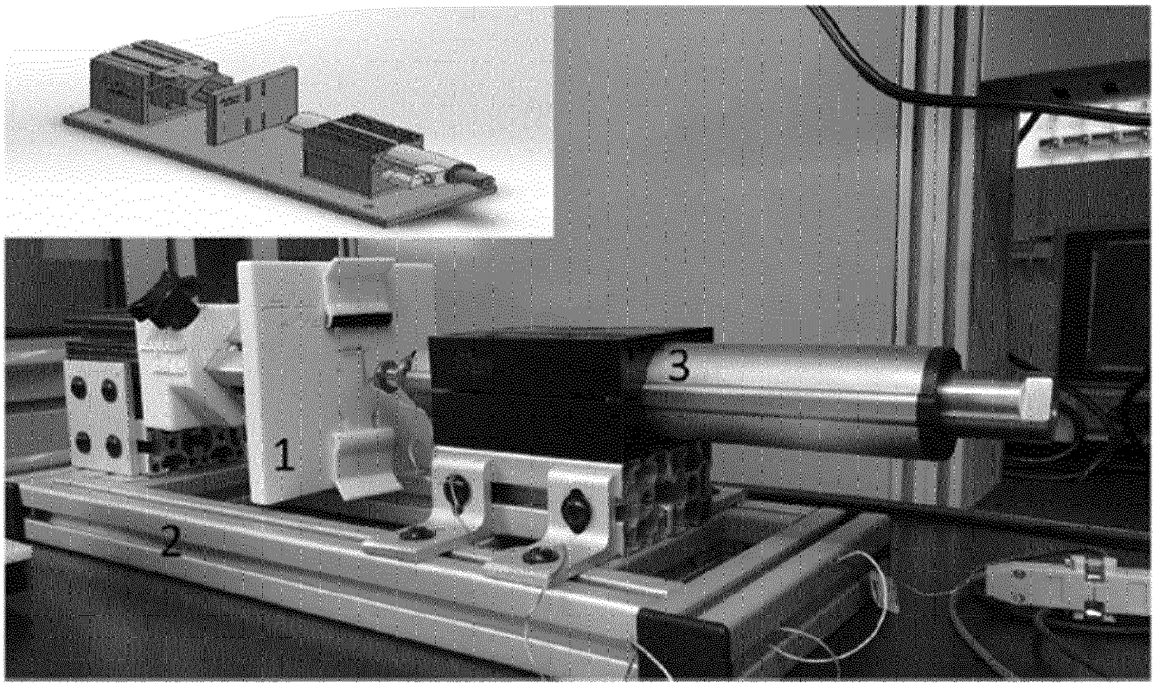
1
2
3

FIG. 7

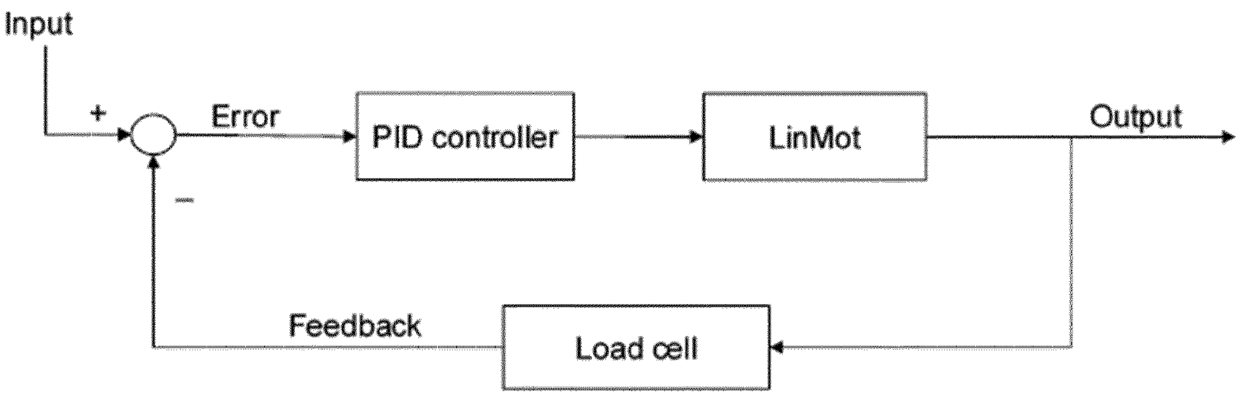
Input
+
Error
PID controller
LinMot
Output
–
Feedback
Load cell

FIG. 8

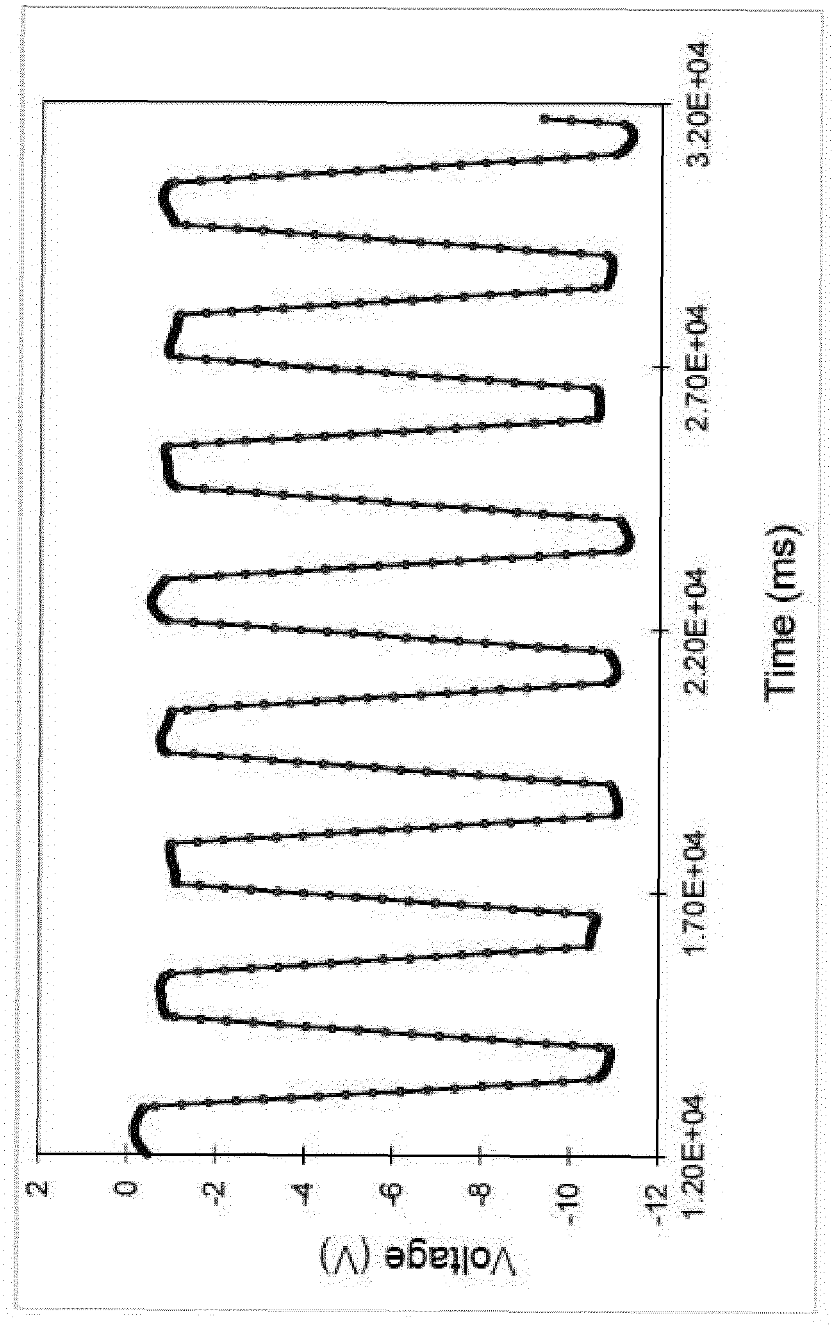

Voltage (V)
2
0
-2
-4
-6
-8
-10
-12
1.20E+04
1.70E+04
2.20E+04
2.70E+04
3.20E+04
Time (ms)


FIG. 9

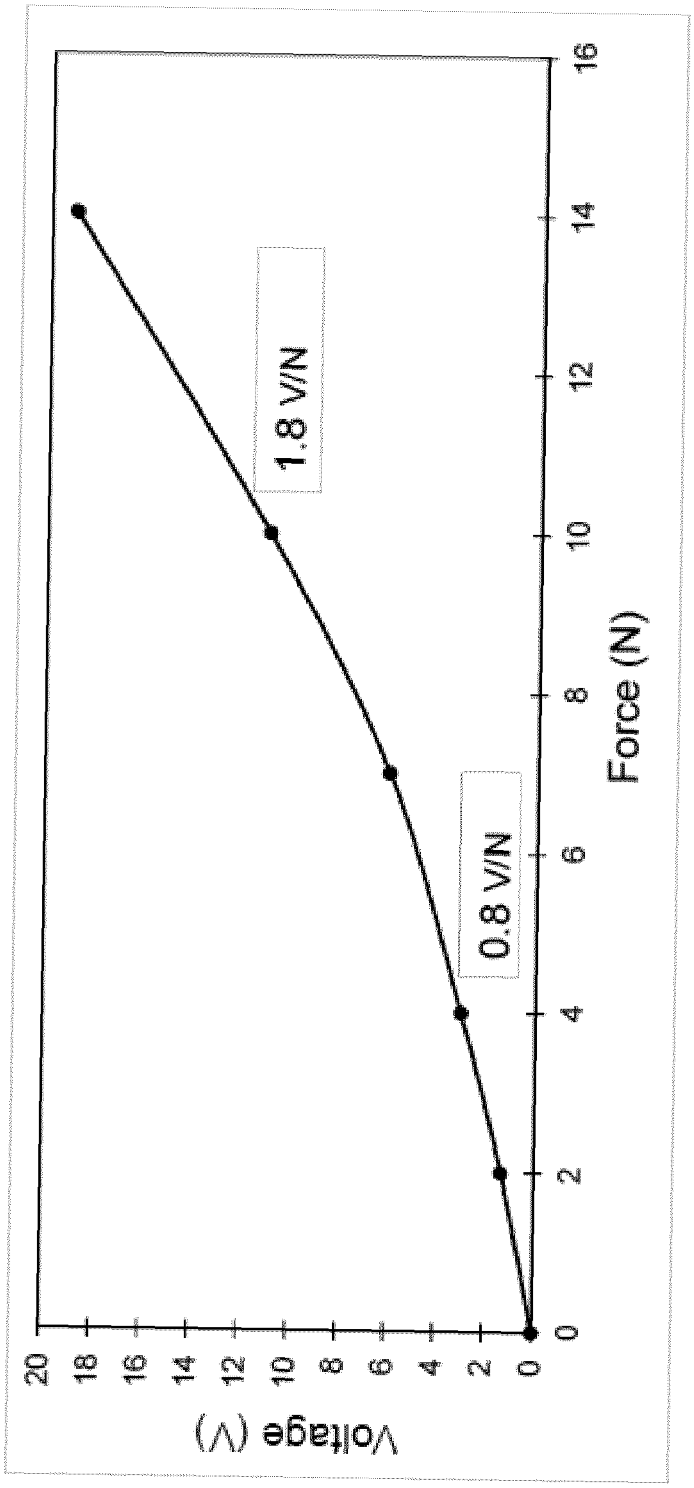
Voltage (V)
20
18
16
14
12
10
8
6
4
2
0
Force (N)
0
2
4
6
8
10
12
14
16
0.8 V/N
1.8 V/N

FIG. 10

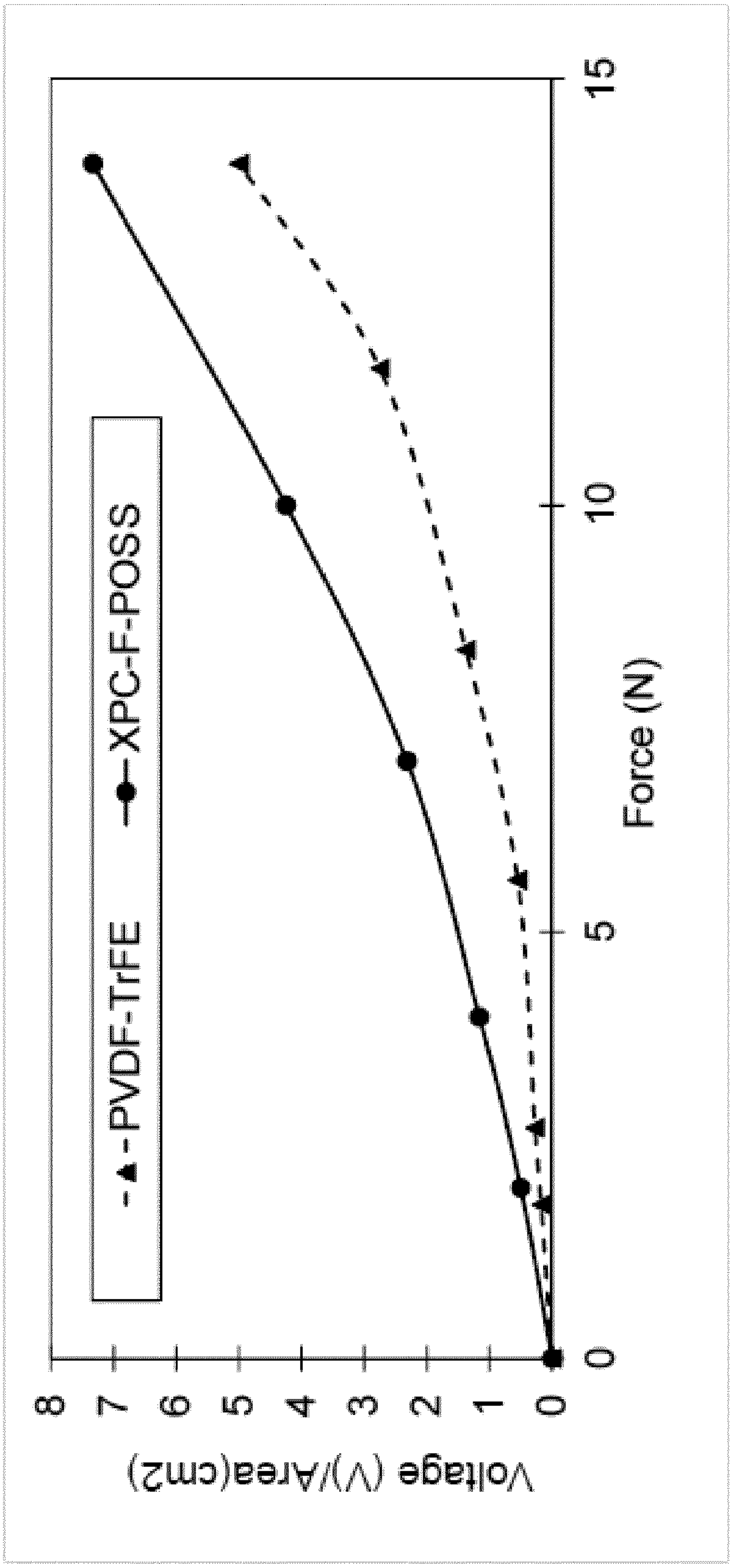
-▲-PVDF-TrFE
—●—XPC-F-POSS
Voltage (V)/Area(cm2)
Force (N)
0
1
2
3
4
5
6
7
8
0
5
10
15

FIG. 11

Europäisches Patentamt
European Patent Office
Office européen des brevets

# EUROPEAN SEARCH REPORT

Application Number
EP 19 19 2505

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | WO 2019/155376 A1 (SABIC GLOBAL TECHNOLOGIES BV [NL]) 15 August 2019 (2019-08-15)<br>* paragraphs [0003], [0043], [0047], [0052], [0053], [0054], [0055], [0078], [0091], [0093]; figures 2,3 *<br>----- | 1-9, 12-14<br>10,11,15 | INV.<br>G01L1/00 |
| Y | WO 2018/226162 A1 (UNIV NANYANG TECH [SG]) 13 December 2018 (2018-12-13)<br>* paragraph [0157]; figure 6 *<br>----- | 10,11,15 | |

TECHNICAL FIELDS SEARCHED (IPC)

G01L

The present search report has been drawn up for all claims

1

| Place of search | Date of completion of the search | Examiner |
|---|---|---|
| The Hague | 13 February 2020 | Kaiser, Jean-Luc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 19 2505

This annex lists the patent family members relating to the patent documents cited in the above-mentioned European search report. The members are as contained in the European Patent Office EDP file on The European Patent Office is in no way liable for these particulars which are merely given for the purpose of information.

13-02-2020

| Patent document cited in search report | Publication date | Patent family member(s) | Publication date |
|---|---|---|---|
| WO 2019155376 A1 | 15-08-2019 | NONE | |
| WO 2018226162 A1 | 13-12-2018 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20170247507 A